Europäisches Patentamt

European Patent Office

Office européen des brevets

(11) Veröffentlichungsnummer: **0 014 354**
**A1**

# EUROPÄISCHE PATENTANMELDUNG

(21) Anmeldenummer: 80100232.0

(22) Anmeldetag: 18.01.80

(51) Int. Cl.³: **A 22 C 13/00**
**B 29 C 27/00**

(30) Priorität: 27.01.79 DE 2903118

(43) Veröffentlichungstag der Anmeldung:
20.08.80 Patentblatt 80/17

(84) Benannte Vertragsstaaten:
AT BE DE FR NL

(71) Anmelder: Gerhard Peter KG
Poststrasse 13
D-3036 Bomlitz II(DE)

(72) Erfinder: Peter, Gerhard
Poststrasse 13
D-3036 Bomlitz II(DE)

(54) Schlauchhüllenverbindung und Verwendung der gekuppelten Schlauchhüllen zur Verpackung.

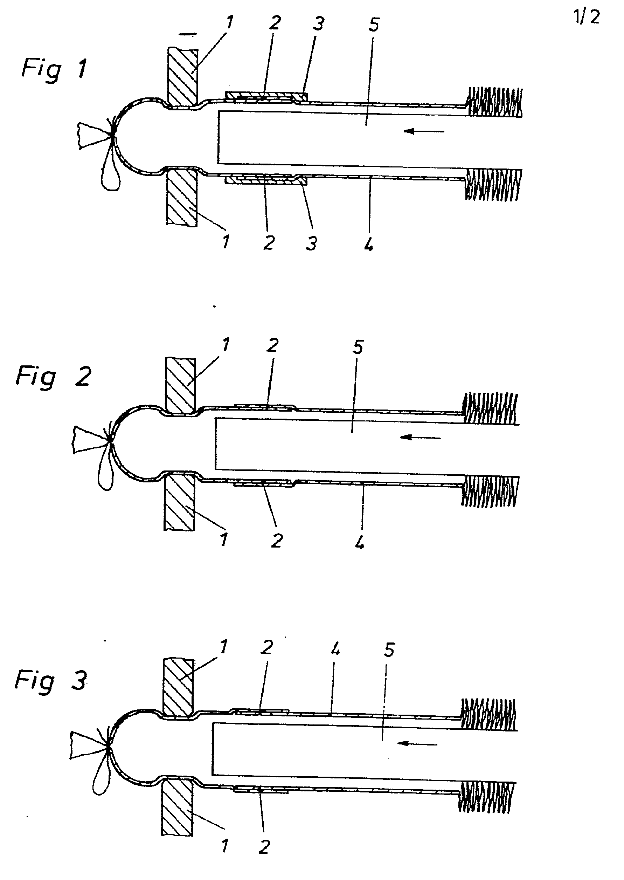

(57) Schlauchhüllen werden verbunden durch eine Einsteck-kupplung (12), bei der das im Inneren des ersten Schlauchhül-lenkupplungsendstückes befindliche zweite Endstück in dem ersten Endstück in Schlauchhüllenlaufrichtung eingeschoben und dort heißnaßfest verklebt und/oder eingesiegelt ange-ordnet ist wie Fig. 3 zeigt. Die Schlauchhüllen eignen sich zur Verpackung insbesondere von Lebensmittel, wie Wurst.

Fig 3

EP 0 014 354 A1

Croydon Printing Company Ltd.

– 1 –

# GERHARD PETER KG

3036 Bomlitz
Str/W

Schlauchhüllenverbindung und Verwendung der gekuppelten
Schlauchhüllen zur Verpackung

Die Erfindung betrifft eine wickel-, raff-, füll- und
bedruckbare Schlauchhüllenverbindung in Form einer
Einsteckkupplung.

Schlauchhüllenverbindungen in Form einer Einsteckkupplung
sind bereits aus der französischen Patentanmeldung
Nr. 75 27 312 (23 22 732) insbesondere aus den dortigen
Figuren 2 und 12 bekannt.

Danach erhält der Fachmann die Anleitung, daß derartige
Einsteckkupplungen entweder in der klassischen Art gemäß
dortiger Figur 2 oder in der weiterentwickelten Art gemäß
dortiger Figur 12 stets mit einer äußeren Hüllmanschette zu
versehen sind. Verwendet man diese Einsteckkupplungen mit
die Kupplungsstellen umhüllenden Außenmanschetten, können
sich bei der Weiterverarbeitung dieser Hüllen insbesondere
bei deren Verwendung zur Wurstherstellung bei verschiedenen
Verarbeitungsstadien Schwierigkeiten ergeben.

WW 5190-Europa

- 2 -

Wie u.a. aus Figur 13 der vorgenannten französischen
Patentschrift, aber auch aus zahlreichen anderen Druckschriften ersichtlich ist, werden Schlauchhüllen mit
und ohne Kupplung häufig aus Transport-Platzersparnisgründen gerafft. Meist erfolgt das Raffen nach dem
Aufblasen der zu raffenden Hülle unter Verwendung eines
in der Hülle angeordneten Blasrohrs, eines sogenannten
Raffrohrs. Diese Raffrohre sind häufig nicht wie in
Figur 13 der französischen Patentschrift dargestellt, an
der Spitze abgeschrägt, sondern glattzylindrisch
gehalten. Um die Raffrohre nicht in Abhängigkeit von dem
verschiedenen Durchmesser der zu raffenden Schlauchhüllen jedesmal auswechseln zu müssen, kommt es häufig
vor, daß der Raffrohrdurchmesser nur wenig geringer ist
als der Schlauchhüllendurchmesser. Bei rein
zylindrischen Raffrohrabmessungen stößt dann die Zylinderkante häufig an die Innenkante der Darmkupplung,
wenn diese gemäß Figur 2 der französischen Patentschrift
aus der mit "1" bezeichneten Richtung auf das Rohr zuläuft oder wenn, wie in Figur 12 der französischen Patentschrift, ein Anstoß des Kupplungsrandes in jedem Fall
nicht auszuschließen ist, ganz gleich, ob gemäß Figur 12
die Schlauchhüllenlaufrichtung aus Richtung "1" oder
aus Richtung "2" erfolgt. Eine weitere Schwierigkeit
tritt dann auf, wenn, wie hier in Figur 1 dargestellt,
derartige, mit ummantelten Kupplungen versehene Schlauchhüllen gefüllt werden.

- 3 -

Dann wird nämlich die bei Füllung der Schlauchhülle 4 aus der Fülltülle 5 mit pastösem Füllgut auf die sogenannte "Darmbremse" 1 zulaufende Schlauchhülle 4 mit dem übergangslos die Schlauchhülle verdickenden Folienaußenmantel 3 um die Schlauchkupplung 2 unter eine plötzlich ansteigende hohe Spannungsbelastung gesetzt, wodurch meist derartige ummantelte Schlauchhüllenkupplungen in der Darmbremse aufreißen und dadurch die gesamte zu füllende Schlauchhülle unbrauchbar wird. Der hiermit verbundene Materialverlust an Schlauchhüllen- und Wurstbrätsubstanz hat in Verbindung mit dem hinzukommenden Zeitverlust für die Brätentfernung, sowie Reinigung und Neuausstattung der Maschine mit entsprechender neuer Schlauchhülle und neuer Wurstbrätsubstanz zu der Überlegung geführt, daß derartig gekuppelte Schlauchhüllen nur noch auf ganz bestimmten, mit vorderseitiger Zuspitzung versehenen Raffrohren verwendet werden können und daß weiterhin eine Füllung derartiger Schlauchhüllen mit pastösen Gütern unter Verwendung einer sogenannten "Darmbremse" entfallen muß.

Da dies eine ganz wesentliche Einschränkung der Verwendung der heute üblichen automatischen Schnellabfüllanlagen bedeuten würde, hat man sich stattdessen entschlossen, Schlauchhüllen, die in der bekannten vorstehenden Art gekuppelt sind, möglichst nicht mehr zu verwenden. Da außerdem bei der Schlauchhüllenfertigung mit endlichen Fertigungslängen nicht exakt ein ganzzahliges Vielfaches der gewünschten Raffraupen erhalten wird, ergeben sich Schlauchverbindungsstellen

WW 5190

- 4 -

in Form von Kupplungen, die gemäß vorstehendem Stand der Technik mit handelsüblichen einsteckkupplungsumwickelten Klebebändern bewerkstelligt werden. Diese mit Klebebändern hergestellten Kupplungen ergeben mindestens die dreifache Verdickung der Schlauchhülle und unterbreche n daher mit Sicherheit den oben beschriebenen automatischen Abfüllprozeß auf den handelsüblichen Füll- und Clipmaschinen bei der Wurstherstellung. Entweder müssen daher die Klebebandkupplungen aus den Raffraupen herausgeschnitten werden oder von vornherein nicht mitgerafft werde n, ganz abgesehen von den weiteren Nachteilen, die beim Raffen mit Hilfe der Zylinder-Raffrohre entstehen. Dies bedeutet in jedem Fall Schlauchhüllenabfall sowie Produktionsausfall beim Abfüllen auf den automatischen Füllmaschinen. Wenn man zur Ko nkretisierung vorstehender Überlegung von zwei Fertigungslängen von Schlauchhüllen zwischen 100 und 120 m ausgeht, die zu Raffraupen von je 20 m Ursprungsschlauchlänge gerafft werden sollen, bedeutet dies, daß von insgesamt 11 entstehenden Raffraupen 10 Raffraupen ohne Kupplung erhalten werden können und eine Raffraupe mit Kupplung. Daraus ergibt sich gemäß statistischem Mittel ein Abfall von 10 % Schlauchhüllensubstanz.

Aufgrund der vorstehenden Schwierigkeiten ergab sich die Aufgabe, wickel-, raff-, füll- und bedruckbare Schlauchhüllenverbindungen in Form von Einsteckkupplungen herzustellen und zu verwende n, welche die vorstehenden Nachteile nicht besitzen und eine einwandfreie Verarbeitung zu Raffraupen und insbesondere einwandfreie Verwendung auf automatischen Füll- und Schließmaschinen bieten.

WW 5190

0014354

- 5 -

Diese Aufgabe wird durch die vorstehende Erfindung
in der Weise gelöst, daß das bei einer Einsteckkupplung
im Innern des ersten Schlauchhüllenkupplungsendstücks
befindliche zweite Schlauchhüllenkupplungsendstück
in dem ersten Endstück in Schlauchhüllenlaufrichtung
eingeschoben und dort heißnaßfest verklebt und/oder eingesiegelt angeordnet ist. Diese vorstehend beschriebene
erfindungsgemäße Lösung war schon deswegen unerwartet
und überraschend, weil der Fachmann bei anderen Versuchen zur vorstehenden Aufgabenlösung, indem er
nämlich einfach die aus Figur 1 ersichtliche Kupplungsmanschette 3 wegließ, sich den gleichen Schwierigkeiten
unverändert oder sogar noch gesteigert insofern
gegenüber sah, als eine durch derartiges Weglassen der
Kupplungsmanschette gebildete Schlauchhüllenkupplung
gemäß Figur 2 fast unvermeidlich zu Abrissen an der
Darmbremse 1 führte, zumal auch aus strömungstechnischen
Gründen zusätzlich noch der Druck des aus der Fülltülle herausgepreßten pastösen Füllgutes besonders an der
eingesteckten Schlauchhülle angreift und somit die Nahtfestigkeit der Kupplung erheblich belastet und schwächt
wie auch andererseits den Gegenpreßdruck der Schlauchhülle gegen die Darmbremse unnötig verstärkt und damit
die Abrißgefahr noch erhöht.

Es war daher um so überraschender, daß man die genannten
Schwierigkeiten vermeidet, wenn man in einfacher Weise
eine erfindungsgemäße Schlaucheinsteckkupplung gemäß
Figur 3 schaffte, bei der das innenliegende Schlauch-

WW 5190

hüllenkupplungsstück in Schlauchhüllenlaufrichtung in das andere Schlauchhüllenkupplungsstück eingeschoben ist. Bei der erfindungsgemäßen Anordnung der Kupplungsstücke zueinander wird die bis dahin für unbedingt notwendig erachtete Kupplungsmanschette eingespart. Außerdem findet die Darmbremse keinerlei über eine gleitende stufenlose Verdickung hinausgehende stufenförmige plötzliche Verstärkung des Reibungswiderstandes der Schlauchhülle gegenüber dem verringerten Darmbremsenlumen und vermeidet dadurch bei entsprechender Wahl der Schlauchhüllensubstanz die sonst unvermeidlichen Abrisse der Schlauchhülle im Kupplungsbereich. Schließlich hat auch die aus der Fülltülle 5 in die Schlauchhülle 4 gepreßte pastöse Füllsubstanz keine Möglichkeit mehr, reibungswiderstandsverstärkend sich hinter einen Teil der Einsteckkupplung zu setzen und damit auch den Preß-druck gegen die Darmbremse 1 zu verstärken.

Die vorstehende erfindungsgemäße Schlauchhülleneinsteck-kupplung läßt sich mit den verschiedensten Schlauchhüllensubstanzen verwirklichen. Je nach der Art der vorliegenden Schlauchhüllensubstanz kann die erfindungsgemäße Einsteckkupplung als Verklebungskupplung und/oder Versiegelungs-kupplung ausgeführt sein.

Im Fall einer Verklebungskupplung kommt mit Rücksicht auf das nach dem Füllen der Schlauchhüllen übliche soge-nannte "Brühen" von Würsten in einer Wasser oder Wasser-

WW 5190

- 7 -

dampfatmosphäre bei 80°C (etwa eine Stunde) mit anschließenden Abschrecken und gegebenenfalls trocknungsbedingte Schrumpfen nur ein Klebstoff in Frage, der derartigen Belastungen gewachsen ist. Somit kommen als Klebstoffe für die erfindungsgemäße Schlauchhülleneinsteckkupplung in Frage unter anderem entweder ein handelsüblicher Cyanoacrylatklebstoff oder ein Klebstoff des Typs Siconet 77® oder ein üblicher Zwei-Komponenten-Kontaktkleber auf Polyurethanbasis.

Ist die haftfeste Verbindung zwischen den aus den Schlauchhüllen selbst gebildeten erfindungsgemäßen Hülleneinsteckkupplung statt durch einen Klebstoff durch eine Siegelung verwirklicht, ist darauf zu achten, daß bei innenseitig siegelfähigen Schlauchhüllen sich in dem in Schlauchhüllenlaufrichtung in das erste äußere Schlauchhüllenkupplungsendstück eingeschoben eingesiegelt angeordneten zweiten inneren Schlauchhüllenkupplungsendstück ein üblicher gegebenenfalls physiologischer unbedenklicher Antisiegelbelag befindet, weil sonst innen siegelfähige Schlauchhüllenwände miteinander versiegelt würden und nicht mehr geöffnet werden könnten. Im Fall einer durch Siegelung erzielten haftfesten Schlauchhülleneinsteckkupplungsverbindung kann im übrigen das Auftragen einer besonderen siegelfähigen Substanz im Kupplungsbereich erübrigt werden, wenn die einsteckgekuppelten Schlauchhüllen schlauchinnenseitig eine als Einstrichlack ausgeführte Siegelschicht tragen, wie sie zum Beispiel näher beschrieben ist in der DE-PS 20 34 257 oder der DE-OS 27 25 586. Dann siegelt nämlich die auf der Innenseite der äußeren Schlauchhülle befindliche Einstrichhaftgleitsiegelschicht fest mit der an sich nicht siegelfähigen Außenseite der innen eingesteckten Schlauchhülle lediglich durch Anwendung geeigneter Siegelmaßnahmen wie zum Bei-

WW 5190

- 8 -

spiel Druck und Temperatur. Dies Verfahren ist besonders problemlos, wenn man als Antisiegelsubstanz zur Vermeidung unerwünschter Schlauchhülleninnenhaftung Substanzen heranzieht, die aus einer Gruppe ausgewählt sind, zu der zum Beispiel Tetrafluoräthylen, Silikonöl und andere Antisiegelsubstanzen gehören.

In Abhängigkeit von der Art der Schlauchhüllensubstanz, der Haftfestigkeit der Einsteckkupplungsverbindung und der bei der Verarbeitung auftretenden Maximalbelastung der Schlauchhülle kann die erfindungsgemäße Einsteckkupplung eine Kupplungsüberlappung mit einer Maximalbreite von 5 bis 30 mm, vorzugsweise 5 bis 25 mm und optimal 7 mm bis 20 mm aufweisen.

Wenn auch die Erfindung insbesondere bei relativ dünnen und dabei gleichzeitig relativ reißfesten Schlauchhüllen gut dann verwirklicht werden kann, wenn die Kupplungsstückkanten im Wesentlichen quer zur Schlauchhüllenlaufrichtung ausgerichtet sind, ist es insbesondere bei der Wahl von Schlauchhüllen mit einer Schlauchhüllenwanddicke von über 50 $\mu$ vorteilhaft, daß die im Wesentlichen parallel untereinander und zueinander verlaufenden Kupplungsstückkanten in bezug auf die Schlauchhüllenlaufrichtung in einem Winkel von 10 bis 80$^{\circ}$, bevorzugt in einem Winkel von 30 bis 60$^{\circ}$, noch vorteilhafter in einem Winkel von 40 bis 50$^{\circ}$ und optimal in einem Winkel von 45$^{\circ}$ verlaufen.

Mit Rücksicht auf die an die verschiedenste n Schlauchhüllensubstanze n angepaßten vorstehend beschriebenen Verwirk-

WW   5190

- 9 -

lichungen des Erfindungsgedankens bei der erfindungsgemäßen Schlauchhülleneinsteckkupplung sind die verklebbaren und/oder siegelbaren Substanzen der Schlauchhülle aus einer Substanzgruppe ausgewählt, zu der unter
anderem Cellulosegenerat mit und ohne Faserverstärkung,
Homo- und Copolymerisate des 6,6-Copolyamids, des
6-Polyamids, des 6,11-Polyamids, des 11-Polyamids und
des 12 Polyamids sowie Homo- und Copolymerisate der
Polyester und der Polyolefine sowie der Polyvinylidenhalogenide, der Polyurethane und der Polycarbonate gehören.

Bevorzugt sind jedoch Schlauchhüllen aus Substanzen, die
schrumpffähig sind und auf ihrer Innenseite einen gleichzeitig siegelfähigen wie auch die Wasserdampfdurchlässigkeit und die Gasdurchlässigkeit erheblich mindernden Überzug tragen. Dies sind z.B. faserverstärkte
Celluloseregenerathüllen, wie sie speziell in bekannter
Weise nach der DE-PS 17 71 564 oder der DE-AS 19 08 698
erzeugt und anschließend mit einer innenliegenden
siegelfähigen und gleichzeitig die Wasserdampfdurchlässigkeit und die Gasdurchlässigkeit stark mindernden
Überzug versehen sind. Derartige Überzüge können vorzugsweise aus polyvinylidenhalogenid-haltigen Substanzen bestehen, wie sie unter anderem in der
DE-OS 16 69 069, der DE-PS 16 69 070, der DE-PS 19 45 970,
der DE-PS 20 34 257, der  DE-OS 24 23 423, der DE-OS
25 39 706 und der DE-OS 27 25 586 beschrieben sind.
Hiervon sind als wie oben angeführt zweckmäßig zu

WW   5190

verwendende Einstrichsubstanzen solche ausgewählt,
wie sie unter anderem in der DE-OS 16 69 069,
DE-PS 16 69 070, DE-PS 20 34 257 und DE-OS 27 25 586
beschrieben sind.

Bei Verwendung derartiger Schlauchhüllen mit vorstehend
beschriebener Innenbeschichtung ist nämlich auch innerhalb des Bereichs der Einsteckkupplung eine durchgehende
entsprechende Innenbeschichtung mit unter anderem hoher
Wasserdampf- und Gassperre gesichert.

Zur Verwirklichung der Erfindung können, wie bereits
oben gesagt, als Trägerschicht für die gekuppelten
Schlauchhüllen nicht nur cellulosische Substanzen,
sondern auch andere, zum Beispiel Kunststoffsubstanzen
herangezogen werden. Geeignete Kunststoffe, wie zum
Beispiel schrumpffähige Polyamidsubstanzen sowie daraus
hergestellte verwendbare Folien sind zum Beispiel
beschrieben in der DE-OS 17 70 406, der DE-OS 18 16 509,
der DE-OS 19 03 266, der DE-OS 19 05 539, der
DE-OS 19 44 619, der DE-AS 19 65 479 und der
DE-OS 20 20 344. Geeignete Schlauchhüllen mit einem
Polyolefin als Träger können zum Beispiel aus Flächengebilden hergestellt werden, wie sie in der DE-OS
24 23 423 beschrieben sind. Da die erfindungsgemäßen
Schlauchhülleneinsteckkupplungen wegen der oben
beschriebenen Belastungen aus Schlauchhüllen gebildet
sein sollten, deren Haftfestigkeit zwischen Träger- und
Siegelschicht besonders gut ist, empfiehlt sich besonders
die Verwendung solcher Hüllensubstanzen, bei denen für
den Fall einer Trägerschicht aus Kunststoffolien diese
Kunststoffe vorher verankerungsverbessernd behandelt worden sind. Dies geschieht in üblicher Weise entweder durch eine Corona-Vorbehandlung und/oder durch eine Verankerungsbeschichtung. Geeignete Corona-Vorbehandlungen lassen sich mit Vorrichtungen erzielen, die beispielsweise in der DE-PS 11 83 232, der DE-OS 16 15 515 oder dem deutschen Gebrauchsmuster 19 72 580 beschrieben worden sind. Geeignete Haftvermittler stehen dem Fachmann in der Form von Substanzen zur Verfügung, wie sie unter anderem in der DE-AS 16 46 200 oder in der DE-OS 22 09 242 beschrieben sind. Bevorzugt für die Verwirklichung der Erfindung verwendbar sind jedoch die bereits oben beschriebenen offenbarten Einstrichlacke, die eine Substanzkombination darstellen, welche gleichzeitig haftvermittelnd, siegelnd, wasserdampf- und gassperrend und darüber hinaus sehr flexibel und geschmeidig sind, so daß sie den Belastungen des Raffens, des Füllens, des Abbindens bzw. Clippens, des Brühens und des Trocknens besonders dann gewachsen sind, wenn die Trägersubstanzen ähnlich belastbar sind.

Wenn auch der Aufbau der vorgenannten erfindungsgemäßen Schlauchhülleneinsteckkupplung nicht an ein bestimmtes Herstellungsverfahren derselben gebunden ist, liegt es andererseits in Rahmen einer möglichst sorgfältigen wiederholbaren genauen Anleitung zum technischen Handeln, die dem Fachmann zum Gegenstand der Erfindung an die Hand gegeben wird, eine zweckmäßige bestimmte Verfahrensschrittfolge im Rahmen eines optimalen Herstellungsverfahrens dieser Schlauchhülleneinsteckverbindung zu geben, wenn man zu besonders leistungsfähigen Kupplungen vor allem im Hinblick auf die bei den verschiedenen, noch näher zu beschreibenden Anwendungen auftretenden Belastungen gelangen will.

Ein vorteilhaftes Verfahren zur Herstellung einer erfindungsgemäßen Schlauchhülleneinsteckklebkupplung

WW 5190

besteht darin, daß man wenigstens das zweite, in das Schlauchhüllenkupplungsendstück einzuführende Schlauchhüllenkupplungsendstück auf seiner Außenseite mit einem handelsüblichen Heiß-Naßfestkleber versieht und dann in Schlauchhüllenlaufrichtung in das erste Schlauchhüllenkupplungsendstück einschiebt. Je nach Art des gewählten Klebstoffs erzeugt man anschließend ohne oder mit temperaturangepaßten Anpreßdruck auf die evtl. flachgelegte Schlauchhüllenkupplungsstelle eine erfindungsgemäße haftfeste Schlauchhüllenverbindung.

Will man statt einer Schlauchhülleneinsteckklebkupplung eine Schlauchhülleneinstecksiegelkupplung erzielen, verwendet man, wie bereits oben angeführt, vorteilhaft einen innenseitig auf der Schlauchhülle bereits vorhandenen Einstrichhaftgleitlack, wie er zum Beispiel näher in der DE-PS 20 34 257 oder DE-OS 27 25 586 beschrieben ist, zur Erzielung einer haftfesten Kupplungsversiegelung. Hierbei bringt man zunächst in das Lumen oder den inneren Hohlraum des in die äußere Schlauchhülle einzuschiebenden Schlauchhüllenkupplungsendstücks einen Antisiegelbelag aus einem handelsüblichen Antisiegelmittel ein und schiebt danach die beiden Schlauchhüllenkupplungsendstücke so ineinander, daß das mit dem Antisiegelbelag versehene Schlauchhüllenkupplungsendstück innerhalb des anderen Schlauchhüllenkupplungsendstücks angeordnet ist und versiegelt dann mittels üblicher Flächenversiegelung unter Anwendung von Druck und/oder Wärme die beiden Endstücke haftfest miteinander.

Nähere offenbarende Angaben zum erfindungsgemäßen Produkt und den vorstehend allgemein beschriebenen erfindungsgemäßen Verfahren sind aus den nachfolgenden Beispielen zu entnehmen.

WW   5190

BAD ORIGINAL

- 13 -

Die vorstehend beschriebene erfindungsgemäße Schlauchhüllenverbindung läßt sich nun auf verschiedene Weise
verwenden. Beispielsweise lassen sich
mit oder ohne Zwischenschaltung eines in Schlauchhüllenlaufrichtung vorzunehmenden Schlauchhüllenraffprozesses
die mit den Kupplungsstücken versehenen Schlauchhüllen
ohne weiteres als Verpackungsmittel zur Herstellung
von leeren oder mit einzuhüllenden Gütern gefüllten
abgebundenen und verschlossenen Raumformeinheiten verwenden. Eine derartige, vorzugsweise von nicht gerafften
Schlauchhüllen ausgehende Schlauchförderung, Schlauchfüllung und Schlauchabteilung ist zum Beispiel beschrieben
in der DE_OS 27 21 392. Naturgemäß lassen sich die erfindungsgemäß gekuppelten Schlauchhüllen auch in anderer
Weise verarbeiten. Sie können zum Beispiel zur Herstellung
von leeren und/oder gefüllten Schlauchketten dienen. Die
Herstellung von Schlauchketten ist unter anderem beschrieben
in der DE-OS 27 32 919.

Will man statt der Schlauchketten vereinzelte Packungseinheiten bilden, kann man die erfindungsgemäß gekuppelten
Schlauchhüllen hierzu ebensogut, zum Beispiel zur
Herstellung von abgeteilten und vereinzelten und gegebenenfalls mit Nahrungsmitteln gefüllten, in besonders vorteilhaften Fällen inhaltskonservierend verschlossenen Verpackungseinheiten verwenden. Dabei erlaubt die Stabilität
der erfindungsgemäßen Schlauchhüllenkupplung auch besonders
hohe Anforderungen, wie sie zum Beispiel beim Abbinden und
Clippen der Schlauchhüllen auftreten. Beispiele für vorteilhaft abgebundene Schlauchhüllen sind zum Beispiel aus
der DE-PS 23 46 134 oder der DE-OS 25 05 672 zu ersehen.


Ebensogut lassen sich die mit den erfindungsgemäßen
Schlauchhüllenkupplungen versehenen Schlauchhüllen zur
Bildung von Wurstattrappen verwenden. Eine vorteilhafte
Wurstattrappe bzw. deren Herstellung ist unter anderem

WW 5190

BAD ORIGINAL

- 14 -

aus der DE-OS 27 27 271 zu ersehen.

Darüber hinaus kann selbstverständlich die mit den erfindungsgemäßen Schlauchhüllenkupplungen versehene Schlauchhülle auch zur Verpackung von anderen als Nahrungsmittelgütern, zum Beispiel technischen Gütern der verschiedensten Art, verwendet werden.

Da die erfindungsgemäße Schlauchkupplung nicht nur bei der direkten Weiterverwendung bzw. Weiterverarbeitung der gerade erzeugten Schlauchhüllen hervorragend verwendbar ist, sondern auch eine große Lagerstabilität zeigt, kann ein längerer Zwischenraum zwischen Herstellung und Weiterverarbeitung der Schlauchhülle liegen. Bevorzugt ist bei der späteren Verarbeitung zu Würsten die Lagerung in Form von Raffraupen. Ein Beispiel für die bei der Herstellung der mit Schlauchkupplung versehenen Schlauchhüllenraffraupen verwendeten schonenden Rafforgane findet sich in der DE-PS 12 53 093. Beispiele für so hergestellte Raffraupen sind unter anderem aus DE-Gbm 19 89 723, dem DE-Gbm 73 35 135 sowie dem DE-Gbm 77 23 313 zu entnehmen. Auch bei sehr langer Aufbewahrungsdauer derartiger in Form von Raffraupen zusammengepreßter, mit den erfindungsgemäßen Schlauchhüllenkupplungen versehenen Schlauchhüllen leidet die Haftfestigkeit der Kupplungen nicht, insbesondere, wenn diese Raffraupen in einer besonders günstigen Verpackungsform aufbewahrt werden. Eine die Lebensdauer derartiger gekuppelter Schlauchhüllen in Raffform erhöhende Verpackung, die darüber hinaus ein auch die erfindungsgemäßen Kupplungsbereiche besonders schonendes Entnehmen der Raupen aus dem Verpackungsgut gewährleistet, ist zum Beispiel zu ersehen aus dem DE-Gbm 72 08 043.

WW 5190

- 15 -

Thermisch entsprechend belastbare Schlauchhüllen, die mit erfindungsgemäßen Schlauchhülleneinsteckkupplungen unter Verwendung eines entsprechend thermisch belastbaren Klebstoffs versehen sind, können naturgemäß auch unter Thermobelastung durchgeführten Nachfolgebehandlungen unterworfen werden. Eine derartige Nachfolgebehandlung ist zum Beispiel das Herstellen von sogenannten "Kranzdärmen". Es hat sich herausgestellt, daß die erfindungs-gemäße Schlauchhülleneinsteckkupplung auch einer nur einseitigen Kontraktion, wie sie bei der Herstellung von Kranzdärmen bevorzugt auftritt, gewachsen ist. Ein Beispiel für eine entsprechend geeignete Kranzdarmherstellung ist aus der DE-AS 23 22 220 zu ersehen.

Beispiel 1:

Zwei Endstücke einer handelsüblichen Schlauchhülle aus papierfaserverstärktem Celluloseregenerat mit einem Hüllendurchmesser von 65 mm entsprechend einer atro-Hüllenliegebreite des flachgelegten Schlauchs von 97 mm und einer Hüllenwanddicke von 90 $\mu$ (sogenannter Dauerwurstdarm) werden so quer zur Folienlaufrichtung geschnitten, daß die entstandenen Schnittflächen zueinander eine Kantenparallelität zeigen. Das zur Herstellung der erfindungsgemäßen Kupplung in das zweite Hüllenendstück einzusteckende erste Hüllenendstück wird dann auf seiner gesamten Außenseite in einer der späteren Einsteck-Kupplungsbreite von 8 mm entsprechenden Flächenbreite mit dem handelsüblichen vorteilhaften Klebstoff Sicomet 77 (R) der Firma Sichelwerke Hannover bestrichen und das so beschichtete erste Hüllenendstück 8 mm tief in das zweite Hüllenendstück in Hüllenverarbeitungslaufrichtung eingeschoben und nach der für diesen bekannten Klebstoff üblichen Härtezeit die so gekuppelte Schlauchhülle im jeweiligen Abstand von je 150 cm zueinander mit weiteren entsprechenden Kupplungen in gleicher Weise versehen. Nach Klebstoffaushärtung wurde die so mehrfach gekuppelte Schlauchhülle in üblicher Weise gerafft und 25 Minuten bei 35°C gewässert. Danach erfolgte die Füllung dieser Schlauchhülle auf einer bekannten FCA-Füllmaschine mit Kunstbrät (Fülltüllendurchmesser 28 mm, Schneckenumdrehung des Füllsystems 235 UpM) unter Bildung von 25 cm langen Würsten bei Verwendung einer üblichen "Dampfbremse", deren mit Federwaage gemessene Durchzugskraft 7,5 kp (statisch) beziehungsweise 9,0 kp (dynamisch) betrug. Die so gefüllten Würste wurden anschließend bei 80°C eine Stunde im Wasserbad gebrüht und dann abgeschreckt und luftgetrocknet.

WW 5190

BAD ORIGINAL

Zum Vergleich zu den wie vorstehend beschrieben hergestellten erfindungsgemäßen Schlauchhüllenkupplungen
wurden parallel hierzu bekannte Schlauchhüllenkupplungen gemäß der aus der französischen Patentschrift
75 27 312 ersichtlichen üblichen Weise (dortige
Figuren 1 und 2) ebenfalls entsprechend gerafft, gefüllt,
gegart und getrocknet.

Bei der Gegenüberstellung des Verhaltens einerseits der
erfindungsgemäß gekuppelten Schlauchhüllen und andererseits der nach dem bekannten Verfahren gekuppelten
Schlauchhüllen unter jeweils den gleichen Behandlungsbelastungen zeigte sich, daß alle sechs erfindungsgemäßen Schlauchhüllenkupplungen die oben angeführten
Testbelastungen überstanden, während von den nach der
französischen Patentschrift 75 27 312 hergestellten
sechs Kupplungen unter diesen Testbedingungen sich vier
Kupplungen in der Darmbremse öffneten und eine weitere
Kupplung den Brüh- und Abschreckprozeß nicht überstand.

Beispiel 2:

Zwei Endstücke einer handelsüblichen Schlauchhülle aus
einem innen nahtlos mit einem PVDC-Copolymerisat-Einstrichlack versehenen papierfaserverstärkten Celluloseregenerat gemäß DE-AS 13 02 384 mit einem Hüllendurchmesser von 60 mm entsprechend einer atro-Hüllenliegebreite von 90 mm und einer Hüllenwanddicke von 100 $\mu$
(sogenannter Leberwurstdarm) werden so quer, das heißt

WW 5190

- 18 -

also 90°, zur Schlauchhüllenachsenlaufrichtung geschnitten, daß die entstandenen Schnittflächenkanten zueinander Kantenparallelität zeigen. Zur Herstellung
der erfindungsgemäßen Kupplungen wird dann das erste
Hüllenendstück, in welches vorher ein handelsübliches
Antisiegelmittel eingebracht worden war, in Schlauchhüllenlaufrichtung in das zweite Hüllenendstück der
späteren Einsteckkupplungsbreite von 18 mm entsprechend
18 mm tief eingesteckt und dann nach Hüllenflachlegung
der Hüllenkupplungsbereich mittels eines Joisten und
Kettenbaum PS 250-Siegelgeräts vier Sekunden lang unter
einem Druck von vier atü bei einer Temperatur von 170°
flächenversiegelt, wobei der auf der Innenseite des
äußeren Schlauchhüllenendstücks befindliche Einstrichhaftgleitlack eine haftfeste Verbindung mit der Celluloseregenerataußenfläche des innenliegenden Schlauchhüllenendstücks einging. Die weitere Behandlung der so erfindungsgemäß einsteckgekuppelten Schlauchhülle erfolgte wie im
Beispiel 1 beschrieben. Die sechs getesteten erfindungsgemäßen Einsteckkupplungen überstanden die Raff-, Füll-,
Gar- und Trockentestbedingungen.

Von den sechs,
wiederum gemäß Figur 1 und 2 der FR-PSA 75 27 312 hergestellten Vergleichskupplungen wurden fünf Kupplungen
beim Passieren der Darmbremse geöffnet, die sechste
Kupplung öffnete sich beim nachfolgenden Garprozeß.

WW - 5190

Beispiel 3:

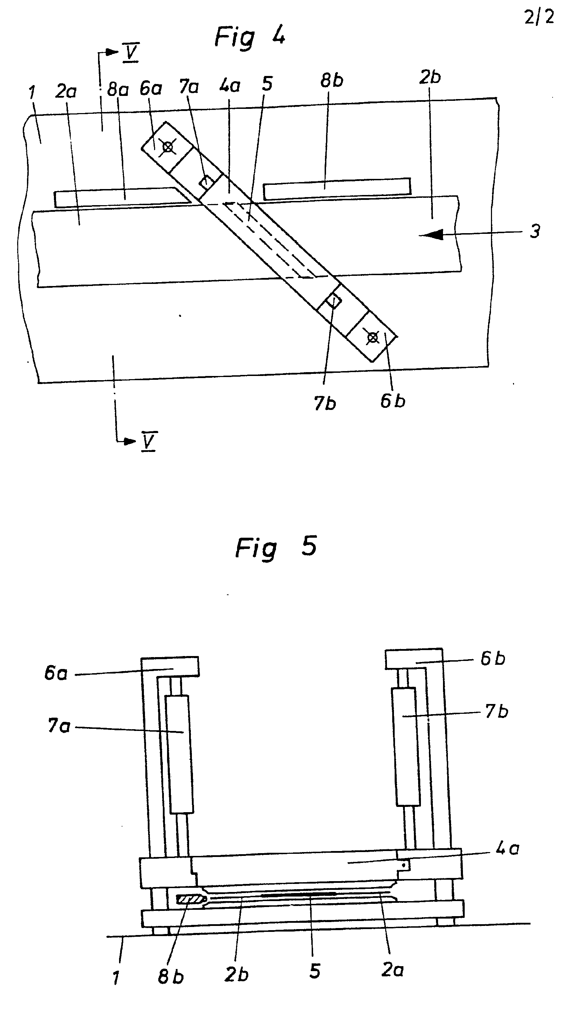

Zwei Endstücke einer handelsüblichen goldschimmerperlglanzpigmentierten Schlauchhülle aus einer innen nahtlos mit
einem PVDC-Copolymerisat-Einstrichlack versehenen papierfaserverstärkten Celluloseregenerat gemäß DE-OS 25 39 705
mit einem Schlauchhüllendurchmesser von 60 mm entsprechend
einer atro-Hüllenliegebreite von 90 mm und einer Hüllenwanddicke von 100 µ (sogenannter Leberwurstdarm) werden
so 45° schräg zur Schlauchhüllenachsenlaufrichtung geschnitten, daß die auf diese Weise entstandenen Hüllenendstückschnittflächenkanten zueinander kantenparallel verlaufen. Zur Herstellung der erfindungsgemäßen Kupplung wird
dann das erste Hüllenendstück, in welches vorher ein handelsübliches Antisiegelmittel eingebracht worden war, in
Schlauchhüllenlaufrichtung in das zweite Hüllenendstück
der späteren Einsteckkupplungsbreite von 18 mm entsprechend
18 mm tief eingesteckt und dann nach Hüllenflachlegung
der Kupplungsbereich mittels eines für die Schrägsiegelung
umgebauten und in den im Anschluß an diese Beispiele anhand
der Figuren 4 und 5 beschriebenen Siegelgeräts vier Sekunden
lang unter einem Druck von 2 atü bei einer Temperatur von
170°C flächenversiegelt, wobei der auf der Innenseite des
äußeren Schlauchhüllenendstücks befindliche Einstrichhaftgleitlack eine haftfeste Verbindung mit der Celluloseregenerataußenfläche des innenliegenden Schlauchhüllenendstücks
eingehen. Die weitere Behandlung der so hergestellten
erfindungsgemäßen schrägeinsteckgekuppelten Schlauchhülle
erfolgte wie in vorstehenden Beispiel 1 beschrieben. Von
den sechs erfindungsgemäßen Einsteckkupplungen überstanden
alle sechs Kupplungen die in Beispiel 1 beschriebenen
Raff-, Füll-, Gar- und Trockenbedingungen, während von den
sechs entsprechend Figur 1 und 2 und zugehöriger Beschreibung
nach der FR-PS 75 27 312 hergestellten Vergleichskupplungen
unter den gleichen sogenannten Testbedingungen sich vier
Kupplungen beim Passieren der Darmbremse und eine Kupplung

WW 5190

- 20 -

beim nachfolgenden Garprozeß öffnete. Eine Kupplung
überstand die vorstehenden Testbedingungen.

Bei den zur Herstellung der Schrägeinsteckkupplung verwendeten umgebauten Siegelgerät handelt es sich um ein
entsprechend verändertes handelsübliches Siegelgerät
der Firma Joisten und Kettenbaum des Typs PS 250.
Das Gerät mußte an die notwendigen Schrägabsiegelungen
durch einen anhand der Figuren 4 und 5 dargestellten
Umbau verändert werden. Die Figur 4 zeigt eine Draufsicht
auf das Schrägsiegelgerät.
Die Figur 5 ist ein Schnitt nach I - I des in Fig. 4
in Draufsicht dargestellten Siegelgeräts.

In den Figuren 4 und 5 bedeuten:

| | | |
|---|---|---|
| 1 | : | Arbeitstisch |
| 2 a | : | äußeres Schlauchhüllenendstück |
| 2 b | : | inneres Schlauchhüllenendstück |
| 3 | : | Schlauchhüllenlaufrichtung |
| 4 a | : | obere Siegelbacke |
| 4 b | : | untere Siegelbacke |
| 5 | : | Schlauchhülleneinsteckkupplung |
| 6 a, 6 b: | | Ständer |
| 7 a, 7 b: | | Siegelbackenhydraulik-Anpreßzylinder |
| 8 a, 8 b: | | Anschlagleisten . |

Im Betrieb werden die bereits ordnungsgemäß ineinander
gesteckten Schlauchhüllenendstücke 2 a und 2 b so auf den
Arbeitstisch 1 längs der Anschlagleisten 8 a und 8 b
gelegt, daß die Schlauchhülleneinsteckskupplungszone 5
genau unter die obere Siegelbacke 4 a und auf die untere
Siegelbacke 4 b zu liegen kommt. So dann wird mittels der
Siegelbackenhydraulik-Anpreßzylinder 7 a und 7 b ein
entsprechender Druck von 4 kp auf die obere Siegelbacke 4 a ausgeübt und wie vorstehend im Beispiel 3 somit die Schlauchhülleneinsteckkupplung flächenversiegelt und nach Abschluß des Siegelvorgangs nach links in Schlauchhüllenverarbeitungslaufrichtung (3) aus dem Siegelgerätbereich abgefördert.

Nach den bis jetzt vorliegenden Versuchen lassen sich mit der erfindungsgemäßen Schlauchhülleneinsteckkupplung Schlauchhüllen mit einem Innendurchmesser von 34 bis 155 mm entsprechend einer sogenanten Trockenliegenbreite von 55 bis 225 mm ausrüsten. Die Wandstärken der miteinander in erfindungsgemäßer Weise zu verbindenden Schlauchhüllen können zwischen 20 und 150 $\mu$ liegen, wenn hieran die Verklebungs- bzw. Versiegelungsbedingungen entsprechend der Wandstärke angepaßt werden.

Im übrigen wurden die in der vorstehenden Beschreibung angeführten Raffungen, soweit sie nicht mit Rafforganen der beschriebenen Art durchgeführt wurden, auf Raffdarmmaschinen des Typs coma T der Firma Küstermann in Groß-Gerau ausgeführt. Sofern nicht eine vollautomatische Füll-, Clip- und Abbindemaschine, wie sie aus dem Markt bekannt sind, für die vorstehend beschriebenen Testversuche benutzt wurde, waren bei Einzelschlauchhüllenverschlüssen mittels Clip Geräte des Typs Techno-Clip, Hersteller Ewald Hagedorn KG in Hamburg, eingesetzt.

WW   5190

Patentansprüche

1.        Wickel-, raff-, füll- und bedruckbare Schlauchhüllenverbindung in Form einer Einsteckkupplung,
d a d u r c h   g e k e n n z e i c h n e t , daß das
im Innern des ersten Schlauchhüllenkupplungsendstücks
befindliche zweite Schlauchhüllenkupplungsendstück in
dem ersten Endstück in Schlauchhüllenlaufrichtung eingeschoben und dort heißnaßfest verklebt und/oder eingesiegelt angeordnet ist.

2.        Schlauchhülleneinsteckkupplung nach Anspruch 1,
d a d u r c h   g e k e n n z e i c h n e t , daß als
Heißnaßfestkleber ein an sich handelsüblicher Cyanoacrylatklebstoff zwischen den zu verklebenden Schlauchhüllenkuppelendstücken angeordnet ist.

3.        Schlauchhülleneinsteckkupplung nach Anspruch 1,
dadurch gekennzeichnet, daß als Heißnaßfestkleber ein an
sich bekannter Klebstoff des Typs Sicomet 77® oder ein
an sich bekannter Zweikomponentenkontaktkleber auf Polyurethanbasis zwischen den zu verklebenden Schlauchhüllenkuppelendstücken angeordnet ist.

4.        Schlauchhülleneinsteckkupplung nach Anspruch 1
bis 3, dadurch gekennzeichnet, daß die verklebbare und/
oder versiegelbare Substanz der Schlauchhülle aus einer
Substanzgruppe ausgewählt ist, zu der Celluloseregenerat
mit und ohne Faserverstärkung, Homo- und Copolymerisate
des 6,6-Polyamids, des 6-Polyamids, des 6,11-Polyamids,
des 11-Polyamids und des 12-Polyamids, Homo- und Copoly-

WW  5190

merisate der Polyester und der Polyolefine sowie der Polyvinylidenhalogenide, Polyurethane und Polycarbonate gehören.

5. Schlauchhülleneinsteckkupplung nach Anspruch 1, dadurch gekennzeichnet, daß bei innenseitig siegelfähigen Schlauchhüllen sich in dem in Schlauchhüllenlaufrichtung in das erste (äußere) Schlauchhüllenkupplungsendstück eingeschoben eingesiegelt angeordneten zweiten (inneren) Schlauchhüllenkupplungsendstück ein üblicher gegebenenfalls physiologisch unbedenklicher Antisiegelbelag befindet.

6. Schlauchhülleneinsteckkupplung nach Anspruch 5, dadurch gekennzeichnet, daß die schlauchinnenseitige Siegelschicht als ein an sich bekannter Einstrichlack gemäß DE-PS 20 34 257 oder DE-OS 27 25 586 ausgebildet ist.

7. Schlauchhülleneinsteckkupplung nach Anspruch 5, dadurch gekennzeichnet, daß die Antisiegellacksubstanz aus einer Gruppe ausgewählt ist, zu der Tetrafluoräthylen und Silikonöl gehören.

8. Schlauchhülleneinsteckkupplung nach den Ansprüchen 1 bis 7, dadurch gekennzeichnet, daß die im wesentlichen parallel untereinander und zueinander verlaufenden Kupplungsstückkanten in Bezug auf die Schlauchhüllenlaufrichtung in einem Winkel von 10 bis 80° verlaufen.

BAD ORIGINAL

0014354

— 24 —

9. Verwendung von nach Ansprüchen 1 - 6 gekuppelten ggf. gerafften Schlauchhüllen als Verpackungsmittel zur Herstellung von leeren oder mit einzuhüllenden Gütern gefüllten abgebundenen verschlossenen Raumformeinheiten.

10. Verwendung der nach Ansprüchen 1 - 8 gekuppelten Schlauchhüllen zur Herstellung von leeren und/oder gefüllten Schlauchketten, von abgeteilten und vereinzelten, mit Nahrungsmitteln gefüllten Verpackungseinheiten, von füllgutkonservierenden Verpackungseinheiten, von Wurstattrappen oder zur Verpackung von technischen Gütern.

KW 5190

Fig 1

Fig 2

Fig 3

Fig 4

Fig 5

Europäisches
Patentamt

**EUROPÄISCHER RECHERCHENBERICHT**

0014354
Nummer der Anmeldung

EP 80 10 0232

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | DE - C - 679 748 (KUNZE) <br> * Das ganze Dokument * | 1-7, 9,10 |
| | -- | |
| | DE - A - 2 023 054 (REICHE) <br> * Anspruch 1 * | 1-7, 9,10 |
| | -- | |
| | NL - A - 73‿17064 (VAESSEN) <br> * Ansprüche 4,5 * | 1-7, 9,10 |
| | -- | |
| | BE - A - 344 717 (FACON) <br> * Anspruch 3 * | 1-7, 9,10 |
| | -- | |
| | NL - A - 62 435 (HUNINK) <br> * Seite 1, Zeile 8 bis Seite 2, Zeile 11; Zeilen 32-35 * | 1-7, 9,10 |
| | -- | |
| | US - A - 3 799 823 (TALTY) <br> * Figuren 1,3 * | 1 |
| | -- | |
| | US - A - 3 158 492 (FIRTH) <br> * Figur 1 * | 1 |
| | -- | |
| | US - A - 3 121 655 (DICKISON) <br> * Figur 1 * | 1,8 |
| | -- ./. | 1 |

**KLASSIFIKATION DER ANMELDUNG (Int. Cl.³)**

A 22 C 13/00
B 29 C 27/00

**RECHERCHIERTE SACHGEBIETE (Int. Cl.³)**

A 22 C
B 29 C
B 29 H

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-05-1980 | CORDENIER |

EPA form 1503.1  06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | FR - A - 1 588 727 (NATURIN)<br>* Figuren * | 1 | |
| | -- | | |
| D | FR - A - 2 322 732 (VISCORA) | | |
| A | US - A - 3 112 516 (BONNEE) | | |
| A | US - A - 3 503 093 (MARBACH) | | |
| | ---- | | |
| | | | **RECHERCHIERTE SACHGEBIETE (Int. Cl. ³)** |

EPA Form 1503.2  06.78